# EUROPÄISCHE PATENTSCHRIFT

(11) **EP 2 027 396 B1**
(45) Veröffentlichungstag und Bekanntmachung des Hinweises auf die Patenterteilung: **22.07.2009**
(21) Anmeldenummer: 07718464.6
(22) Anmeldetag: 25.05.2007
(51) Int. Cl.: F16F 7/09

(54) **DÄMPFER FÜR MÖBEL**
DAMPER FOR FURNITURE
AMORTISSEUR POUR MEUBLES

(30) Priorität: 13.06.2006 AT 10062006
(43) Veröffentlichungstag der Anmeldung: 25.02.2009
(73) Patentinhaber: Fulterer Gesellschaft m.b.H., 6890 Lustenau (AT)
(72) Erfinder: FULTERER, Manfred, 6890 Lustenau (AT)
(74) Vertreter: Hofmann, Ralf U.
(86) Internationale Anmeldenummer: PCT/AT2007/000253
(87) Internationale Veröffentlichungsnummer: WO 2007/143760

(56) Entgegenhaltungen:
- WO-A-03/106575
- DE-B3- 10 313 659
- JP-A- 58 063 432
- US-A- 3 013 830

## Beschreibung

Die Erfindung betrifft einen Dämpfer für Möbel, insbesondere für Ausziehführungen von Möbeln, mit einem Zylinder und einem im Zylinder achsial verschiebbaren Kolben, der mit einem elastisch verformbaren Kolbenteil versehen ist, das eine Reibfläche aufweist, welche beim Dämpfvorgang an eine innere Oberfläche des Zylinders angedrückt ist.

Dämpfer dieser Art sind in unterschiedlichen Ausführungsformen bekannt. Durch die Reibung zwischen der Reibfläche des elastisch verformbaren Kolbenteils und der inneren Oberfläche des Zylinders beim Dämpfvorgang wird eine Bremskraft hervorgerufen, durch welche zumindest ein Teil, vorzugsweise zumindest ein Großteil der gewünschten Dämpfung erreicht wird. Meist wird hierbei die Reibfläche nur für eine der Bewegungsrichtungen des Kolbens an die innere Oberfläche des Zylinders angedrückt, während für die andere Bewegungsrichtung ein Abstand oder eine wesentlich geringere Anlagekraft vorliegt, wodurch in diese andere Bewegungsrichtung die Dämpfungswirkung im Wesentlichen aufgehoben ist. Zur Steuerung der Dämpfungswirkung in Abhängigkeit von der Bewegungsrichtung des Kolbens können beispielsweise rückschlagventilartige Vorrichtungen vorhanden sein.

Derartige Dämpfer werden insbesondere bei Einzugsautomatiken von Ausziehführungen von Möbeln eingesetzt. Durch die Ausziehführung wird ein bewegliches Möbelteil gegenüber einem Möbelkorpus aus diesem ausziehbar und in diesen einfahrbar gelagert. Durch die Einzugsautomatik wird in einem letzten Abschnitt des Einfahrens eine in die Einziehrichtung wirkende Kraft hervorgerufen, durch welche das ausziehbare Möbelteil selbsttätig eingezogen wird, beispielsweise mittels Federn oder mittels Schrägflächen durch Wirkung der Gravitation. Um eine manuelle Einschubbewegung und/oder eine durch die Einzugsautomatik hervorgerufene Einschubbewegung zu dämpfen, werden Dämpfer eingesetzt, welche in die Einschubrichtung wirken, während die Ausziehbewegung vorzugsweise möglichst ungedämpft ist.

Ein Dämpfer der eingangs genannten Art ist beispielsweise aus der DE 103 13 659 B3 bekannt. Dieser pneumatische Dämpfer besitzt als elastisch verformbares Kolbenteil eine elastische Manschette, deren Durchmesser beim Dämpfvorgang gegenüber ihrem entspannten Zustand zumindest in einem mittleren Abschnitt vergrößert ist, wodurch eine äußere Reibfläche der Manschette an eine innere Oberfläche des Zylindermantels des Zylinders angedrückt wird. Die Vergrößerung des Durchmessers der elastischen Manschette erfolgt durch einen Druckunterschied zwischen einem radial innerhalb der Wand und einem radial außerhalb der Wand der Manschette liegenden Arbeitsraum.

Ein weiterer Dämpfer der eingangs genannten Art ist aus der EP 1 260 159 B1 bekannt. Das elastisch verformbare Kolbenteil ist hier im Bereich einer Kolbenstange angeordnet, die in einem Kanal des Zylinders geführt ist, der einen geringeren Durchmesser als der Kolben aufweist. Das elastisch verformbare Kolbenteil kann als Vollkörper aus einem gummielastischen Material gefertigt sein, wobei es beim Dämpfvorgang durch eine Kompression in seinem Durchmesser vergrößert wird und seine Reibfläche an die innere Oberfläche des Kanals des Zylinders angedrückt wird.

Die DE 202 20 284 U1 beschreibt einen weiteren'Dämpfer der eingangs genannten Art. Dieser umfasst ein bei achsialer Druckbeaufschlagung radial spreizbares Kolbenteil, wodurch eine Reibfläche des Kolbenteils an eine innere Oberfläche des Zylinders angedrückt wird. Die Druckbeaufschlagung des Kolbenteils erfolgt durch eine Staudruckbeaufschlagung eines Dichtteils.

Weitere Dämpfer dieser Art sind aus der EP 0 841 451 A2 und WO 03/100287 A1 bekannt.

Ein Problem bei Dämpfern dieser Art besteht darin, dass sich die Reibung zwischen der Reibfläche und der inneren Oberfläche des Zylinders beim Dämpfvorgang und somit die gesamte Dämpfleistung im Laufe der Nutzungsdauer des Dämpfers verändern kann. Beispielsweise ist es bekannt, bei der Herstellung des Dämpfers die Reibfläche des elastisch verformbaren Kolbenteils zu behandeln, um eine geringere Reibung zur inneren Oberfläche des Zylinders zu erreichen. Diese Behandlung wird auch als Versprödung bezeichnet. Es wurde festgestellt, dass nach einer größeren Anzahl von Dämpfvorgängen sich die Oberflächeneigenschaften der Reibfläche derart geändert haben, dass die Reibung zur inneren Oberfläche des Zylinders wesentlich angestiegen ist. Wenn das bewegbare Möbelteil, an dessen Ausziehvorrichtung der Dämpfer angeordnet ist, mit einer relativ hohen Geschwindigkeit geschlossen wird, so kommt es zu einer relativ hohen mechanischen Betastung der kraftübertragenden Komponenten, die somit im Laufe der Nutzungsdauer stark ansteigt. Dies kann beispielsweise dazu führen, dass die gesamte, den Dämpfer aufweisende Einzugsautomatik von der Ausziehführung abgerissen wird, insbesondere wenn schwere Einzüge gedämpft werden sollen. Beispielsweise sind bei Schwerlastauszügen pro Dämpfer 120 kg an bewegter Masse zu dämpfen.

In Abhängigkeit von der Ausbildung der Reibfläche des elastisch verformbaren Kolbenteils kann es nach einer größeren Anzahl von Dämpfvorgängen auch zu einer Verringerung der Dämpfleistung kommen, wodurch es bereits bei einer niedrigeren Geschwindigkeit, mit der das ausziehbare Möbelteil an den Dämpfer anläuft, zu einem unerwünschten Durchschlagen des Dämpfers kommen kann.

Aufgabe der Erfindung ist es, einen Dämpfer der eingangs genannten Art bereitzustellen, bei dem über eine große Zahl von Dämpfvorgängen eine gleichmäßige Dämpfungswirkung erreicht wird. Erfindungsgemäß gelingt dies durch einen Dämpfer mit den Merkmalen des Anspruchs 1.

Überraschenderweise wurde festgestellt, dass durch die Aufbringung eines trockenen PTFE (Polytetrafluorethylen)-Pulvers (= Teflonpulvers) auf die Reibfläche des elastischen Kolbenteils über eine große Anzahl von Dämpfvorgängen eine weitgehend gleichmäßige Dämpfungswirkung erreicht wird. Erhöhte mechanische Belastungen durch ein Ansteigen der Dämpfkraft im Laufe der Benutzungsdauer ebenso wie eine unerwünschte Abnahme der Dämpfwirkung im Laufe der Benutzungsdauer können dadurch vermieden oder zumindest wesentlich verringert werden.

In Fett oder Öl emulgiertes Teflonpulver ist als Schmierstoff für nicht gattungsgemäße Einrichtungen, beispielsweise für Zahnradgetriebe, an sich bekannt.

In einer vorteilhaften Ausführungsform der Erfindung weist das PTFE-Pulver eine mittlere Korngröße auf, die im Bereich zwischen 1 µm und 10 µm liegt, wobei ein Bereich zwischen 2 µm und 7 µm bevorzugt ist. Beispielsweise kann die mittlere Korngröße 4 µm betragen.

Wenn im Rahmen dieser Schrift von "innen" und "außen" die Rede ist, so ist hiermit die Lage relativ zur zentralen Längsachse des Zylinders gemeint, d. h. ein weiter innen liegendes Teil liegt näher bei der zentralen Längsachse als ein weiter außen liegendes Teil.

Weitere Vorteile und Einzelheiten der Erfindung werden im Folgenden anhand der beiliegenden Zeichnung erläutert. In dieser zeigen:
- Fig. 1: eine Schrägsicht eines Ausführungsbeispiels eines Dämpfers gemäß der Erfindung, im ausgezogenen Zustand;
- Fig. 2: eine Seitenansicht des Dämpfers im eingefahrenen Zustand;
- Fig. 3: einen Schnitt entlang der Linie A-A von Fig. 2;
- Fig. 4: einen vergrößerten Ausschnitt aus Fig. 3;
- Fig. 5 2);: einen Längsschnitt des elastisch verformbaren Kolbenteils (Schnittlinie A-A von Fig.
- Fig. 6: eine Schrägsicht des Kolbens mit der Kolbenstange;
- Fig. 7: einen Schnitt entsprechend Fig. 3 beim Dämpfvorgang;
- Fig. 8: einen vergrößerten Ausschnitt von Fig. 7.

Ein Ausführungsbeispiel eines Dämpfers gemäß der Erfindung ist in den Figuren dargestellt. Der pneumatische Dämpfer umfasst einen Zylinder 1, der einen eine zentrale Längsachse 29 umgebenden Zylindermantel 8 aufweist und in dem ein Kolben 2 in achsialer Richtung verschiebbar ist. Der Kolben 2 ist mit einer Kolbenstange 3 versehen, welche aus einer Öffnung im Zylinderboden 4 des Zylinders 1 aus diesem herausgeführt ist. -

Zwischen dem Kolben 2 und dem Zylinderboden 4 des Zylinders 1 liegt ein erster Zylinderraum 5 und zwischen dem Kolben 2 und einem Zylinderdeckel 7 liegt ein zweiter Zylinderraum 6.

Der Kolben 2 ist mit einer Lippendichtung 9 versehen, die eine Dichtlippe 10 aufweist, welche zumindest beim. Dämpfvorgang an der inneren Oberfläche 11 des Zylindermantels 8 des Zylinders 1 anliegt und hierbei zu einer Abdichtung zwischen dem ersten und dem zweiten Zylinderraum 5, 6 führt. Die Lippendichtung 9 ist im gezeigten Ausführungsbeispiel scheibenförmig mit einer inneren Öffnung und einer Ringnut 12 ausgebildet, die die Dichtlippe 10 freistellt. Die Lippendichtung 9 besteht aus einem elastischen Kunststoff.

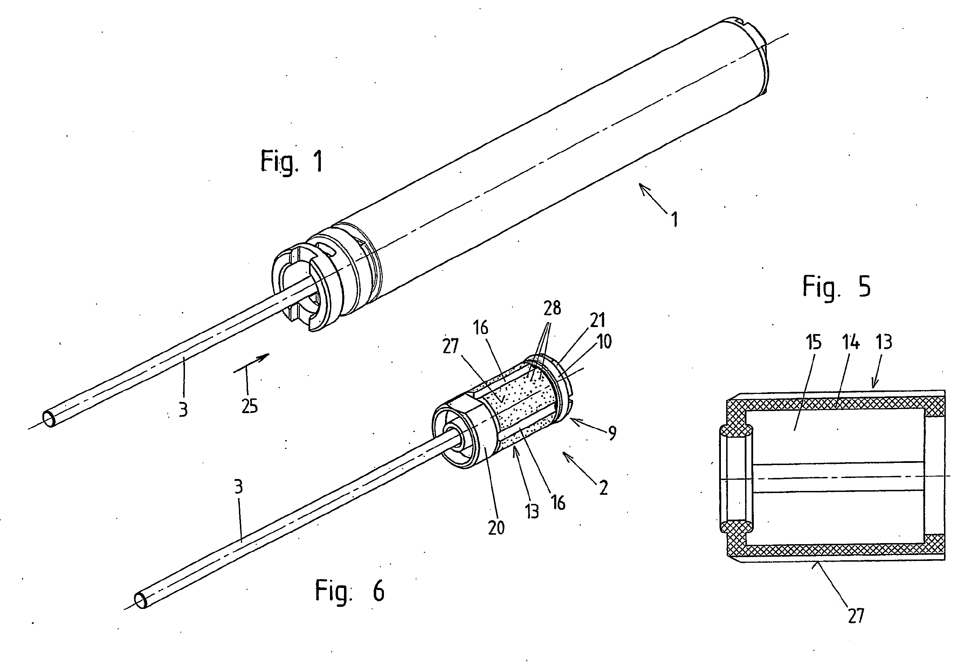

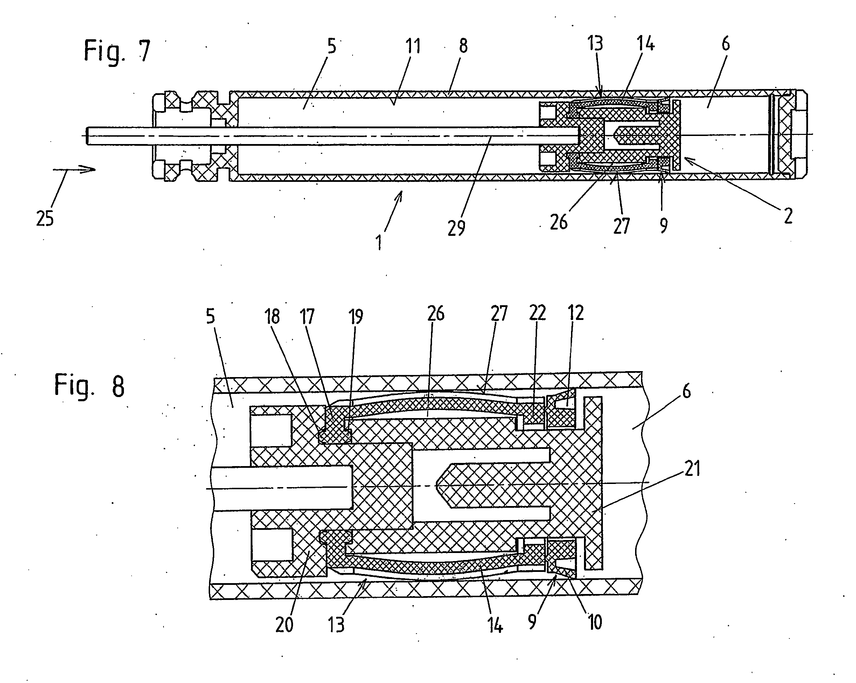

Der Kolben 2 ist weiters mit einem manschettenförmigen elastisch verformbaren Kolbenteil 13 versehen. Dieses weist einen Mantel 14 auf, der einen Innenraum 15 umfänglich umgibt (vgl. Fig. 5). Beim Dämpfvorgang ist der Durchmesser des Mantels 14 des Kolbenteils 13 zumindest über einen Abschnitt der Längserstreckung des Mantels 14 gegenüber dem entspannten Zustand des Kolbenteils 13 vergrößert. Beispielsweise ist der Mantel 14 in einem mittleren Abschnitt seiner Längserstreckung nach außen ausgewölbt, wie dies in den Fig. 7 und 8 dargestellt ist. Im entspannten Zustand besitzt der Mantel 14 vorzugsweise eine im Wesentlichen zylindermantelförmige Ausbildung. Längsnuten 16 an der Außenseite des Mantels 14 erleichtern diese Auswölbung.

Das manschettenförmige Kolbenteil 13 besitzt weiters im Bereich seines einen Endes einen vom Mantel 14 nach innen abstehenden Ringflansch 17, an dem beidseitig abstehende Dichtlippen 18, 19 angeordnet sind. Diese Dichtlippen 18, 19 sind zwischen einem Kolbenvorderteil 20 und einem Kolbenunterteil 21 des Kolbens 2 eingesetzt und ein innerhalb des Mantels 14 liegender Raum 26 ist somit gegenüber dem ersten Zylinderraum 5 abgedichtet. Beispielsweise sind das Kolbenvorderteil 20 und Kolbenunterteil 21 durch einen Klemmsitz oder eine Schnappverbindung miteinander verbunden.

Am dem Ringflansch 17 gegenüberliegenden Ende ist das Kolbenteil 13 mit einem weiteren gegenüber dem Mantel 14 nach innen vorstehenden Ringflansch 22 versehen, an welchem die Lippendichtung 9 mit einer Dichtlippe 24 anliegen kann, die über eine dem Kolbenteil 13 zugewandte Seitenfläche 23 vorsteht.

Die Lippendichtung 9 und der Ringflansch 22 des Kolbenteils 13 sind mit ihren zentralen Öffnungen auf dem Kolbenunterteil 21 angeordnet und ragen hierbei in eine nutartige Vertiefung dieses Kolbenunterteils 21.

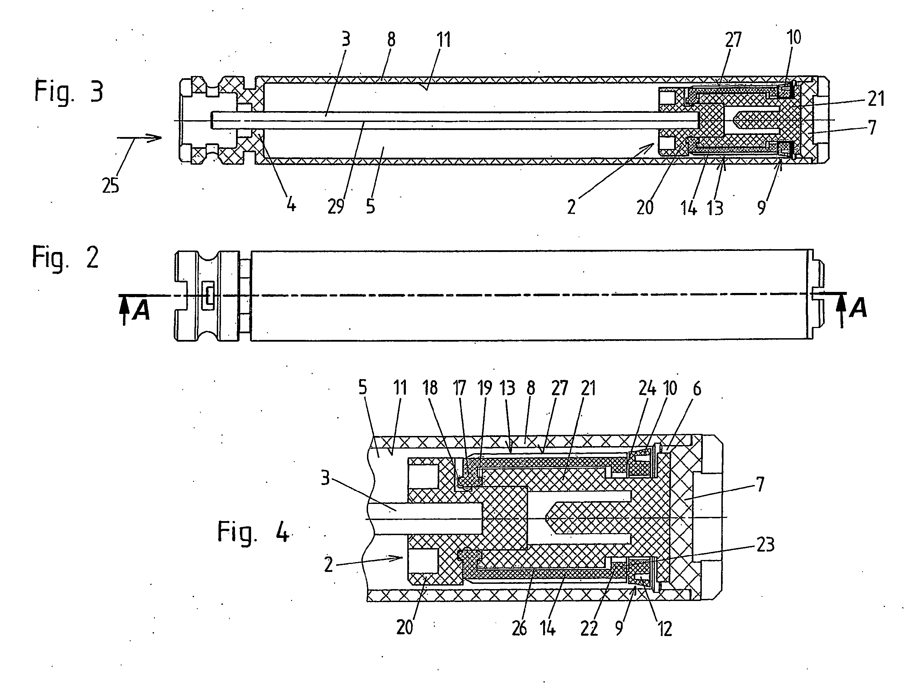

In den Fig. 2 bis 6 ist das Kolbenteil 13 in seinem entspannten Zustand dargestellt, ebenso die Lippendichtung 9. Wenn ausgehend von der in den Fig. 2 bis 4 dargestellten eingefahrenen Stellung des Kolbens 2 die Kolbenstange 3 ausgezogen wird (entgegen der Dämpfungsrichtung 25), so kann Luft aus dem ersten Zylinderraum 5 zwischen dem Zylindermantel 8 und dem Kolben 2 in den zweiten Zylinderraum 6 strömen. Die Dichtlippe 10 kann hierbei durch eine geringen Überdruck der vorbeiströmenden Luft weiter von der inneren Oberfläche 11 des Zylindermantels 8 beabstandet werden bzw., wenn sie im entspannten Zustand an dieser anliegt, von dieser abgehoben werden.

Wenn der Kolben 2 in die Dämpfungsrichtung 25 bewegt wird, so bewirkt ein Unterdruck im ersten Zylinderraum 5 und/oder ein Überdruck im zweiten Zylinderraum 6 eine Anlage der Dichtlippe 10 der Lippendichtung 9 an der inneren Oberfläche 11 des Zylindermantels 8, wodurch es zu einer Abdichtung zwischen den Zylinderräumen 5, 6 kommt. Der Druck im Zylinderraum 5 steht über Spalte zwischen der Lippendichtung 9 und dem Kolbenunterteil 21 und zwischen dem Ringflansch 22 und dem Kolbenunterteil 21 mit dem innerhalb des Mantels 14 des Kolbenteils 13 liegenden Raum 26 in Verbindung. Außerhalb des Mantels 14 herrscht der Druck des ersten Zylinderraums 5. Durch diesen Druckunterschied kommt es zur Durchmesservergrößerung des Mantels 14, wodurch dessen äußere Oberfläche, die eine Reibfläche 27 bildet, an die innere Oberfläche 11 des Zylindermantels 8 angedrückt wird. Die resultierende Reibung führt zur Dämpfwirkung bei der Verschiebung des Kolbens 2 in die Dämpfungsrichtung 25.

In einem an den Zylinderdeckel 7 anschließenden Abschnitt der Längserstreckung des Zylindermantels 8 kann dessen innere Oberfläche 11 mit Längsnuten versehen sein, um die Dämpfungswirkung in diesem Abschnitt zu verringern oder im Wesentlichen aufzuheben (nicht dargestellt in den Figuren).

Auf die Reibfläche 27 des elastisch verformbaren Kolbenteils 13 ist ein PTFE-Pulver 28 aufgebracht, das nur in Fig. 6 durch Punkte angedeutet ist. Dieses PTFE-Pulver liegt in trockenem Zustand vor, d.h. nicht in Form einer Emulsion.

Beispielsweise kann die Aufbringung dadurch erfolgen, dass der Kolben 2 im fertigmontierten Zustand (vgl. Fig. 6) in einer mit PTFE-Pulver befüllten Wanne gedreht wird. Bei der Auftragung des PTFE-Pulvers 28 könnte dieses grundsätzlich auch in Form einer Emulsion in einem flüchtigen Lösungsmittel vorliegen, welches sich nach der Auftragung verflüchtigt, so dass wiederum trockenes PTFE-Pulver 28 auf der Reibfläche 27 zurückbleibt.

Durch die Aufbringung des PTFE-Pulvers 28 auf die Reibfläche 27 kann ein vorteilhafter Wert der Reibung zwischen der Reibfläche 27 und der inneren Oberfläche 11 des Zylinders 1 erreicht werden. Die Reibungskraft beim Dämpfvorgang bleibt hierbei über eine sehr große Anzahl von Dämpfvorgängen weitgehend konstant, wie Dauerversuche gezeigt haben.

Beispielsweise kann ein PTFE-Pulver mit einer durchschnittlichen Korngröße von 4 µm eingesetzt werden.

Das elastisch verformbare Kolbenteil 13 besteht aus einem gummielastischen Material, beispielsweise Kautschuk (natürlichem oder synthetischen) oder einem anderen Elastomer oder thermoplastischen Elastomer.

Ein erfindungsgemäßer Dämpfer eignet sich in vorteilhafter Weise für einen Einsatz bei Möbeln, insbesondere bei Ausziehführungen von Möbeln. Solche Ausziehführungen sind günstigerweise mit einem Dämpfer versehen, um die Einfahrbewegung eines von der Ausziehführung geführten Möbelteils in einem letzten Abschnitt zu dämpfen. Die Dämpfung der Einschubbewegung kann sich sowohl auf eine von einem Benutzer vermittelte kinetische Energie als auch auf eine von einer Einzugsautomatik vermittelte kinetische Energie beziehen.

Das gezeigte Ausführungsbeispiel der Erfindung könnte beispielsweise dahingehend modifiziert werden, dass das elastisch verformbare Kolbenteil 13 und die Lippendichtung 9 einstückig ausgebildet sind.

Die Erfindung kann auch im Zusammenhang mit anders ausgebildeten Kolben 2 eingesefizt werden, die mit einem elastisch verformbaren Kolbenteil versehen sind, welches beim Dämpfvorgang an eine innere Oberfläche des Zylinders angedrückt wird, beispielsweise im Zusammenhang mit Ausbildungen, wie sie aus dem in der Beschreibungseinleitung genannten Stand der Technik bekannt sind. Hierbei kann das elastisch verformbare Kolbenteil auch anders als manschettenförmig ausgebildet sein, beispielsweise auch als Vollkörper aus einem gummielastischen Material gefertigt sein. Das Andrücken der Reibfläche des elastisch verformbaren Kolbenteils an die innere Oberfläche des Zylinders könnte hierbei auch durch eine elastische Kompression des Kolbenteils bewirkt werden.

### Legende zu den Hinweisziffern:

- 1: Zylinder
- 2: Kolben
- 3: Kolbenstange
- 4: Zylinderboden
- 5: erster Zylinderraum
- 6: zweiter Zylinderraum
- 7: Zylinderdeckel
- 8: Zylindermantel
- 9: Lippendichtung
- 10: Dichtlippe
- 11: innere Oberfläche
- 12: Ringnut
- 13: Kolbenteil
- 14: Mantel
- 15: Innenraum
- 16: Längsnut
- 17: Ringflansch
- 18: Dichtlippe
- 19: Dichtlippe
- 20: Kolbenvorderteil
- 21: Kolbenunterteil
- 22: Ringflansch
- 23: Seitenfläche
- 24: Dichtlippe
- 25: Dämpfungsrichtung
- 26: Raum
- 27: Reibfläche
- 28: PTFE-Pulver
- 29: Längsachse

## Patentansprüche

1. Dämpfer für Möbel, insbesondere für Ausziehführungen von Möbeln, mit einem Zylinder (1) und einem im Zylinder (1) achsial verschiebbaren Kolben (2), der mit einem elastisch verformbaren Kolbenteil (13) versehen ist, das eine Reibfläche (27) aufweist, welche beim Dämpfvorgang an eine innere Oberfläche (11) des Zylinders (1) angedrückt ist, **dadurch gekennzeichnet, dass** auf die Reibfläche (27) des elastisch verformbaren Kolbenteils (13) ein trockenes PTFE-Pulver (28) aufgebracht ist.

2. Dämpfer nach Anspruch 1, **dadurch gekennzeichnet, dass** das PTFE-Pulver eine mittlere Korngröße aufweist, die im Bereich zwischen 1 µm und 10 µm liegt, vorzugsweise im Bereich zwischen 2 µm und 7 µm liegt.

3. Dämpfer nach Anspruch 1 oder Anspruch 2, **dadurch gekennzeichnet, dass** der Durchmesser des elastisch verformbaren Kolbenteils (13) beim Dämpfvorgang gegenüber dem entspannten Zustand des Kolbenteils (13) zumindest abschnittsweise vergrößert ist.

4. Dämpfer nach Anspruch 3, **dadurch gekennzeichnet, dass** das elastisch verformbare Kolbenteil (13) manschettenförmig ausgebildet ist und einen einen Innenraum (15)umfänglich umgebenden elastisch verformbaren Mantel (14) aufweist.

5. Dämpfer nach Anspruch 4, **dadurch gekennzeichnet, dass** die Vergrößerung des Durchmessers des elastisch verformbaren Kolbenteils (13) beim Dämpfvorgang durch einen Druckunterschied zwischen der Außenseite und der Innenseite des Mantels (14) bewirkt ist.

6. Dämpfer nach einem der Ansprüche 1 bis 5, **dadurch gekennzeichnet, dass** der Dämpfer ein pneumatischer Dämpfer ist.

## Claims

1. A damping device for furniture, in particular for pull-out guides of furniture, having a cylinder (1) and a piston (2) which is axially displaceable in the cylinder (1) and which is provided with a resiliently deformable piston part (13) with a friction surface (27) pressed against an inner surface (11) of the cylinder (1) during the damping procedure, **characterised in that** a dry PTFE powder (28) is applied to the friction surface (27) of the resiliently deformable piston part (13).

2. A damping device according to claim 1, **characterised in that** the PTFE powder has an average grain size in the range between 1 µm and 10 µm, preferably in the range between 2 µm and 7 µm.

3. A damping device according to claim 1 or claim 2, **characterised in that** during the damping procedure, the diameter of the resiliently deformable piston part (13) is increased, at least section-wise, as compared with the unstressed state of the piston part (13).

4. A damping device according to claim 3, **characterised in that** the resiliently deformable piston part (13) is sleeve-shaped and has a resiliently deformable shell (14) circumferentially surrounding an internal space (15).

5. A damping device according to claim 4, **characterised in that** the increase in the diameter of the resiliently deformable piston part (13) during the damping procedure is brought about by a pressure difference between the outer surface and the inner surface of the shell (14).

6. A damping device according to any one of claims 1 to 5, **characterised in that** the damping device is a pneumatic damping device.

## Revendications

1. Amortisseur pour meuble, notamment pour des coulisses de meuble comportant un cylindre (1) et un piston (2) coulissant axialement dans le cylindre (1), le piston (2) étant muni d'une partie (13) déformable élastiquement dont une surface de friction (27) est appliquée contre la surface intérieure (11) du cylindre (1) pendant la phase d'amortissement,
**caractérisé en ce qu'**
une poudre de PTFE sèche (28) est appliquée sur la surface de friction (27) de la partie de piston (13) déformable élastiquement.

2. Amortisseur selon la revendication 1,
**caractérisé en ce que**
la poudre de PTFE a une granulométrie moyenne dans une plage comprise entre 1 µm et 10 µm et de préférence dans une plage comprise entre 2 µm et 7 µm.

3. Amortisseur selon la revendication 1 ou 2,
**caractérisé en ce que**
le diamètre de la partie de piston (13) déformable élastiquement est augmenté au moins par segment par rapport à son état détendu au cours de la phase d'amortissement.

4. Amortisseur selon la revendication 3,
**caractérisé en ce que**
la partie de piston (13) déformable élastiquement a une forme de manchon et comporte une enveloppe (14) déformable élastiquement, entourant la périphérie d'un volume intérieure (15).

5. Amortisseur selon la revendication 4,
**caractérisé en ce que**
l'agrandissement du diamètre de la partie de piston (13) déformable élastiquement au cours de la phase d'amortissement est réalisé par une différence de pression entre le côté extérieur et le côté intérieur de l'enveloppe (14).

6. Amortisseur selon les revendications 1 à 5,
**caractérisé en ce que**
l'amortisseur est un amortisseur pneumatique.
